# EUROPÄISCHE PATENTSCHRIFT

(11) **EP 1 000 659 B1**
(45) Veröffentlichungstag und Bekanntmachung des Hinweises auf die Patenterteilung: **03.03.2004**
(21) Anmeldenummer: 99120965.1
(22) Anmeldetag: 03.11.1999
(51) Int. Cl.: B01J 39/20, C08F 257/00, C08F 291/00

(54) **Verfahren zur Herstellung von monodispersen gelförmigen Kationenaustauschern**
Method for producing monodispersed gel-like cation exchangers
Méthode de préparation d'échangeurs cationiques monodispersés sous forme de gel

(30) Priorität: 16.11.1998 DE 19852667
(43) Veröffentlichungstag der Anmeldung: 17.05.2000
(73) Patentinhaber: Bayer Chemicals AG, 51368 Leverkusen (DE)
(72) Erfinder: Podszun, Wolfgang, Dr., 51061 Köln (DE); Klipper, Reinhold, Dr., 50933 Köln (DE); Halle, Olaf, Dr., 51061 Köln (DE); Strüver, Werner, Dr., 51375 Leverkusen (DE); Wagner, Rudolf, Dr., 51061 Köln (DE); Seidel, Rüdiger, Dr., 51375 Leverkusen (DE)

(56) Entgegenhaltungen:
- EP-A- 0 838 263
- EP-A- 0 870 772
- EP-A- 0 964 002
- DE-A- 19 634 393
- DE-A- 19 644 217
- US-A- 3 218 301
- US-A- 4 500 652

## Beschreibung

Die Erfindung betrifft ein Verfahren zur Herstellung von monodispersen gelförmigen Kationenaustauschern mit hoher Stabilität und Reinheit.

In jüngster Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen Perlpolymerisaten erhalten werden.

Eine der Möglichkeiten, monodisperse Perlpolymerisate herzustellen, besteht im sogenannten seed/feed-Verfahren, wonach ein monodisperses Polymerisat ("Saat") im Monomer gequollen und dieses dann polymerisiert wird. Seed/feed-Verfahren werden beispielsweise in den EP-A-0 098 130 und EP-A-0 101 943 beschrieben.

Ferner ist aus der EP 0 870 772 ein Verfahren bekannt, mit dem kugelförmige Polymerisate mit hoher Quellbarkeit und niedrigem Gehalt an löslichen Anteilen erhalten werden, wobei als Polymerisationsinitiator mindestens ein aliphatischer Peroxyester verwendet wird.

Die bei seed/feed-Verfahren eingesetzten Saatpolymere sollen einen hohen Quellungsindex aufweisen, damit sie beim seed/feed-Verfahren eine große Menge des zugesetzten Monomeren aufnehmen können. Als Quellungsindex (QI) ist der Quotient aus dem Volumen des gequollenen Polymers und dem Volumen des nicht gequollenen Polymers definiert. Der Quellungsindex läßt sich in bekannter Weise durch den Gehalt an Vernetzer steuern: niedrige Vemetzergehalte führen zu hohen Quellungsindices und umgekehrt. So weisen beispielsweise Styrolpolymerisate, die mit 0,8 bis 2,0 Gew.-% Divinylbenzol vernetzt sind, Quellungsindices von 8 bis 2,5 in Toluol auf. Niedrig vernetzte Saatpolymerisate haben allerdings einen recht hohen Anteil an nicht vemetzten, löslichen Polymeren. Dieser Anteil an nicht vernetzten, löslichen Polymeren im Saatpolymerisat ist in mehrfacher Hinsicht unerwünscht:
1. Die Polymerisation der gequollenen Saat kann dadurch gestört werden, daß die durch das zugesetzte Monomer aus der Saat herausgelösten Polymeranteile Verklebungen der Partikel untereinander verursachen.
2. Die Funktionalisierung zur Herstellung der Ionenaustauscher kann dadurch erschwert werden, daß die herausgelösten Polymeranteile in den zur Funktionalisierung eingesetzten Reaktionslösungen angereichert werden.
3. Die Endprodukte (Ionenaustauscher) können erhöhte Mengen an löslichen Polymeren enthalten, was zu einem unerwünschten Ausbluten (leaching) der Ionenaustauscher führen kann.

Ein weiteres Problem der bekannten Kationenaustauscher besteht in ihrer nicht immer ausreichenden mechanischen und osmotischen Stabilität. So können Kationenaustauscherperlen bei der Verdünnung nach der Sulfonierung durch die auftretenden osmotischen Kräfte zerbrechen. Für alle Anwendungen von Kationenaustauschern gilt, daß die in Perlform vorliegenden Austauscher ihren Habitus behalten müssen und nicht während der Anwendung teilweise oder auch gänzlich abgebaut werden oder in Bruchstücke zerfallen dürfen. Bruchstücke und Perlpolymerisatsplitter können während der Anwendung in die zu reinigenden Lösungen gelangen und diese selbst verunreinigen. Ferner ist das Vorhandensein von geschädigten Perlpolymerisaten für die Funktionsweise der in Säulenverfahren eingesetzten Kationenaustauscher selbst ungünstig. Splitter führen zu einem erhöhten Druckverlust des Säulensystems und vermindern damit den Durchsatz an zu reinigender Flüssigkeit durch die Säule.

Für Kationenaustauscher gibt es eine Vielzahl unterschiedlicher Anwendungen. So werden sie beispielsweise bei der Trinkwasseraufbereitung, bei der Herstellung von Reinstwasser (notwendig bei der Mikrochip-Herstellung für die Computerindustrie), zur chromatographischen Trennung von Glucose und Fructose und als Katalysatoren für verschiedene chemische Reaktionen (wie z. B. bei der Bisphenol-A-Herstellung aus Phenol und Aceton) eingesetzt. Für die meisten dieser Anwendungen ist erwünscht, daß die Kationenaustauscher die ihnen zugedachten Aufgaben erfüllen, ohne daß Verunreinigungen, die von ihrer Herstellung herrühren können oder während des Gebrauches durch Polymerabbau entstehen, an ihre Umgebung abgegeben werden. Das Vorhandensein von Verunreinigungen im vom Kationenaustauscher abfließenden Wasser macht sich dadurch bemerkbar, daß die Leitfähigkeit und/oder der Gehalt an organischem Kohlenstoff (TOC Gehalt) des Wassers erhöht sind.

Die Aufgabe der vorliegenden Erfindung ist die Bereitstellung von monodispersen gelförmigen Kationenaustauschern mit hoher Stabilität und Reinheit.

Unter Reinheit im Sinne der vorliegenden Erfindung ist in erster Linie gemeint, daß die Kationenaustauscher nicht ausbluten. Das Ausbluten äußert sich in einem Anstieg der Leitfähigkeit von mit dem Ionenaustauscher behandeltem Wasser.

Es wurde nun gefunden, daß monodisperse gelförmige Kationenaustauscher mit hoher Stabilität und Reinheit durch ein Saat-Zulauf-Verfahren unter Verwendung von Polymerisaten mit hoher Quellbarkeit und niedrigem Gehalt an löslichen Polymeranteilen erhalten werden können.

Gegenstand der vorliegenden Erfindung ist ein Verfahren zur Herstellung von monodispersen gelförmigen Kationenaustauschem mit hoher Stabilität und Reinheit durch
a) Ausbilden einer Suspension von Saatpolymerisat in einer kontinuierlichen wäßrigen Phase,
b) Quellen des Saatpolymerisates in einem Monomergemisch aus Vinylmonomer, Vemetzer und Radikalstarter,
c) Polymerisieren des Monomergemisches im Saatpolymerisat,
d) Funktionalisieren des gebildeten Copolymerisates durch Sulfonierung,
dadurch gekennzeichnet, daß das Saatpolymerisat ein vernetztes Polymerisat mit einem Quellungsindex von 2,5 bis 7,5 (gemessen in Toluol) ist und einen Gehalt an nicht verdampfbaren, löslichen Anteilen (gemessen durch Extraktion mit Tetrahydrofuran) von weniger als 1 Gew.-% hat.

In einer besonderen Ausführungsform der vorliegenden Erfindung wird als Saatpolymerisat ein vernetztes Polymerisat, hergestellt aus
i) 96,5 bis 99,0 Gew.-% Monomer,
ii) 0,8 bis 2,5 Gew.-% Vernetzer und
iii) 0,2 bis 1,0 Gew.-% aliphatischer Peroxyester als Polymerisationsinitiator, verwendet.

Monomere (i) zur Herstellung des Saatpolymerisates sind Verbindungen mit einer radikalisch polymerisierbaren C=C-Doppelbindung pro Molekül. Bevorzugte Verbindungen dieser Art umfassen aromatische Monomere wie beispielsweise Vinylund Vinylidenderivate des Benzols und des Naphthalins, wie beispielsweise Vinylnaphthalin, Vinyltoluol, Ethylstyrol, α-Methylstyrol, Chlorstyrole, vorzugsweise Styrol, sowie nicht-aromatische Vinyl- und Vinylidenverbindungen, wie beispielsweise Acrylsäure, Methacrylsäure, Acrylsäure-C₁-C₈-alkylester, Methacrylsäure-C₁-C₈-alkylester, Acrylnitril, Methacrylnitril, Acrylamid, Methacrylamid, Vinylchlorid, Vinylidenchlorid und Vinylacetat, sowie Gemische aus diesen Monomeren. Vorzugsweise werden die nicht-aromatischen Monomeren in untergeordneten Mengen, vorzugsweise in Mengen von 0,1 bis 50 Gew.-%, insbesondere 0,5 bis 20 Gew.-%, bezogen auf aromatische Monomere, verwendet. In den meisten Fällen wird man jedoch ausschließlich aromatische Monomere verwenden.

Als Vernetzer ii) sind Verbindungen geeignet, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat und Methylen-N,N'-bisacrylamid. Divinylbenzol wird als Vernetzer bevorzugt. Für die meisten Anwendungen sind kommerzielle Divinylbenzolqualitäten, die neben den Isomeren des Divinylbenzols auch Ethylvinylbenzol enthalten, ausreichend.

Aliphatische Peroxyester iii) zur Herstellung von Saatpolymerisaten entsprechen den Formeln I, II oder III 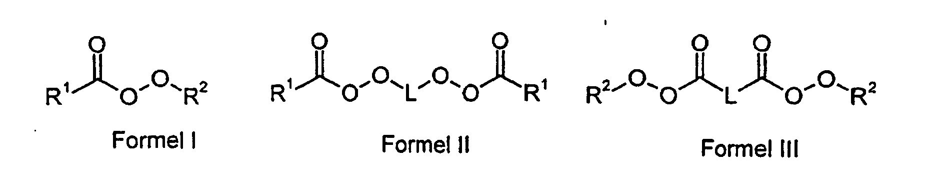 worin
- R¹: für einen Alkylrest mit 2 bis 20 C-Atomen oder einen Cycloalkylrest mit 3 bis 20 C-Atomen steht,
- R²: für einen verzweigten Alkylrest mit 4 bis 12 C-Atomen steht und
- L: für einen Alkylrest mit 2 bis 20 C-Atomen oder einen Cycloalkylenrest mit 3 bis 20 C-Atomen steht.

Bevorzugte aliphatische Peroxyester gemäß Formel I sind z.B.
tert.-Butylperoxyacetat,
tert.-Butylperoxyisobutyrat,
tert.-Butylperoxypivalat,
tert.-Butylperoxyoctoat,
tert.-Butylperoxy-2-ethythexanoat,
tert.-Butylperoxyneodecanoat,
tert.-Amylperoxyneodecanoat,
tert.-Amylperoxypivalat,
tert.-Amylperoxyoctoat,
tert.-Amylperoxy-2-ethylhexanoat und
tert.-Amylperoxyneodecanoat.

Bevorzugte aliphatische Peroxyester gemäß Formel II sind z.B.
2,5-Bis(2-ethylhexanoylperoxy)-2,5-dimethylhexan,
2,5-Dipivaloyl-2,5-dimethylhexan und
2,5-Bis(2-neodecanoylperoxy)-2,5-dimethylhexan.

Bevorzugte aliphatische Peroxyester gemäß Formel III sind z.B.
Di-tert.-butylperoxyazelat und
Di-tert.-amylperoxyazelat.

Selbstverständlich können auch Mischungen der vorgenannten Polymerisationsinitiatoren eingesetzt werden.

In einer weiteren besonderen Ausführungsform der vorliegenden Erfindung ist das Saatpolymerisat mikroverkapselt. Dabei ist es besonders vorteilhaft, die Komponenten zur Herstellung des Saatpolymerisates ( Monomer (i), Vernetzer (ii) und aliphatischer Peroxyester als Polymerisationsinitiator (iii)) mikrozuverkapseln und die mikroverkapselten Partikel zum Saatpolymerisat auszuhärten.

Für die Mikroverkapselung kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapseln können mit üblichen Härtungsmitteln wie z.B. Formaldehyd oder Glutardialdehyd gehärtet werden. Die Verkapselung von Monomertröpfchen beispielsweise mit Gelatine, gelatinehaltigen Koazervaten und gelatinehaltigen Komplexkoazervaten, wird in EP-A-0 046 535 eingehend beschrieben. Die Methoden der Verkapselung mit synthetischen Polymeren sind an sich bekannt. Gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten in der wäßrigen Phase gelösten Reaktivkomponente (z.B. einem Amin) zur Reaktion gebracht wird. Die Mikroverkapselung mit gelatinehaltigem Komplexkoazervat ist bevorzugt.

Die Polymerisation (Aushärtung) der mikroverkapselten Tröpfchen aus Monomer (i), Vernetzer (ii) und aliphatischer Peroxyester (iii) zum Saatpolymerisat erfolgt in wäßriger Suspension, wobei es vorteilhaft ist, einen in der wäßrigen Phase gelösten Inhibitor einzusetzen. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin, Kondensationsprodukte aus Phenolen mit Aldehyden. Weitere organische Inhibitoren sind stickstoffhaltige Verbindungen wie z.B. Diethylhydroxylamin und Isopropylhydroxylamin. Resorzin wird als Inhibitor bevorzugt. Die Konzentration des Inhibitors beträgt 5 bis 1 000 ppm, vorzugsweise 10 bis 500 ppm, besonders bevorzugt 20 bis 250 ppm, bezogen auf die wäßrige Phase.

Das Saatpolymerisat wird nach der Polymerisation aus der wäßrigen Suspension isoliert und getrocknet, vorzugsweise auf einen Wassergehalt von weniger als 0,5 Gew.-%. Die Teilchengröße des Saatpolymerisates beträgt 5 bis 500 µm, vorzugsweise 20 bis 400 µm, besonders bevorzugt 100 bis 300 µm. Die Form der Teilchengrößenverteilungskurve muß der des gewünschten Kationenaustauschers entsprechen. Zur Herstellung eines engverteilten bzw. monodispersen Ionenaustauschers wird demnach ein engverteiltes bzw. mondisperses Saatpolymerisat verwendet.

Das getrocknete Saatpolymerisat wird in einer wäßrigen Phase suspendiert, wobei das Verhältnis von Polymerisat und Wasser zwischen 2:1 und 1:20 liegen kann. Bevorzugt wird 1:2 bis 1:10. Die Anwendung eines Hilfsmittels, z.B. eines Tensides oder eines Schutzkolloides ist nicht notwendig. Das Suspendieren kann z.B. mit Hilfe eines normalen Rührers erfolgen, wobei niedrige bis mittlere Scherkräfte angewendet werden.

Zu dem suspendierten Saatpolymerisat wird eine Mischung aus Monomer (a), Vernetzer (aa) und Radikalstarter (aaa) ("feed") hinzugegeben.

Als Monomer (a) sind die bereits früher genannten Monomere (i), nämlich Styrol, Vinyltoluol, Ethylstyrol, alpha-Methylstyrol, Chlorstyrol, Acrylsäure, Methacrylsäure, Acrylsäurester, Methacrylsäureester, Acrylnitril, Methacrylnitil, Acrylamid, Methacrylamid, sowie Gemische aus diesen Monomeren geeignet. Bevorzugt werden Mischungen aus Styrol und Acrylnitril. Besonders bevorzugt wird ein Gemisch aus 92 bis 99 Gew.-% Styrol und 1 bis 8 Gew.-% Acrylnitril.

Als Vernetzer (aa) seien Divinylbenzol, Divinyltoluol, Trivinylbenzol, Divinylnaphtalin, Trivinylnaphtalin, Diethylenglycoldivinylether, Octadien-1,7, Hexadien-1,5, Ethylendlycoldimethacrylat, Triethylenglycoldimethacrylat, Trimethylolpropantrimethachrylat, Allylmethacrylat und Methylen-N,N*'*-bisacrylamid. Divinylbenzol wird bevorzugt. Für die meisten Anwendungen sind kommerzielle Divinylbenzolqualitäten, die neben den Isomeren des Divinylbenzols auch Ethylvinylbenzol enthalten, ausreichend.

Der Gehalt an Vernetzer im Monomergemisch beträgt 1 bis 25 Gew.-%, vorzugsweise 7 bis 15 Gew.-%.

Für das erfindungsgemäße Verfahren geeignete Radikalstarter (aaa) sind z.B. Peroxyverbindungen wie Dibenzoylperoxid, Dilaurylperoxid, Bis(p-chlorbenzoylperoxid), Dicyclohexylperoxydicarbonat, tert.-Butylperoctoat, 2,5-Bis(2-ethylhexanoylperoxy)-2,5-dimethylhexan und tert.-Amylperoxy-2-etylhexan, desweiteren Azoverbindungen wie 2,2'-Azobis(isobutyronitril) und 2,2'-Azobis(2-methylisobutyronitril). Bevorzugt wird Dibenzoylperoxid eingesetzt. Die Radikalstarter werden im allgemeinen in Mengen von 0,05 bis 2,5 Gew.-%, vorzugsweise 0,2 bis 1,5 Gew.-% bezogen auf die Mischungen aus Monomer (a) und Vernetzer (aa) angewendet.

Das Verhältnis von Saatpolymerisat zu zugesetzter Mischung (seed/feed-Verhältnis) beträgt im allgemeinen 1:1 1 bis 1:20, vorzugsweise 1:2 bis 1:10, besonders bevorzugt 1:1,5 bis 1:6. Die zugesetzte Mischung quillt in das Saatpolymerisat ein. Die maximale feed-Menge, die von der Saat vollständig aufgenommen wird, hängt in starkem Maße vom Vernetzergehalt der Saat ab. Bei gegebener Teilchengröße des Saatpolymerisates läßt sich durch das seed/feed-Verhältnis die Teilchengröße des entstehenden Copolymerisates bzw. des Ionenaustauschers einstellen.

Die Polymerisation des gequollenen Saatpolymerisats zum Copolymerisat erfolgt in Anwesenheit eines oder mehrerer Schutzkolloide und gegebenenfalls eines Puffersystems. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)-acrylsäureestem geeignet. Sehr gut geeignet sind auch Cellulosederivat, insbesondere Celluloseester und Celluloseether, wie Carboxymethylcellulose und Hydroxyethylcellulose. Cellulosederivate sind als Schutzkolloid bevorzugt. Die Einsatzmenge der Schutzkolloide beträgt im allgemeinen 0,05 bis 1 Gew.-% bezogen auf die Wasserphase, vorzugsweise 0,1 bis 0,5 Gew.-%.

In einer besonderen Ausführungsform der vorliegenden Erfindung wird die Polymerisation in Anwesenheit eines Puffersystems durchgeführt. Bevorzugt werden Puffersysteme, die den pH-Wert der Wasserphase bei Beginn der Polymerisation auf einen Wert zwischen 14 und 6, vorzugsweise zwischen 13 und 9 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphat- oder Boratsalze.

Das Verhältnis von organischer Phase zur Wasserphase beträgt bei der Polymerisation der gequollenen Saat 1:1 bis 1:20, vorzugsweise 1:1.5 bis 1:10.

Die Temperatur bei der Polymerisation des gequollenen Saatpolymerisates richtet sich nach der Zerfallstemperatur des eingesetzten Initiators (aaa). Sie liegt im allgemeinen zwischen 50 bis 150°C, vorzugsweise zwischen 55 und 130°C, besonders bevorzugt 60-100°C. Die Polymerisation dauert 1 bis einige Stunden. Es hat sich bewährt, ein Temperaturprogramm anzuwenden, bei dem die Polymerisation bei niedriger Temperatur, beispielsweise 60°C begonnen wird und mit fortschreitendem Polymerisationsumsatz die Reaktionstemperatur gesteigert wird. Auf diese Weise läßt sich beispielsweise die Forderung nach sicherem Reaktionsverlauf und hohem Polymerisationsumsatz sehr gut erfüllen.

Nach der Polymerisation kann das Copolymerisat mit üblichen Methoden z.B. durch Filtrieren oder Dekantieren isoliert und gegebenenfalls nach ein oder mehreren Wäschen getrocknet und falls gewünscht gesiebt werden.

Die Umsetzung der Copolymerisate zum Kationenaustauscher erfolgt durch Sulfonierung. Geeignete Sulfonierungsmittel sind Schwefelsäure, Schwefeltrioxid und Chlorsulfonsäure. Bevorzugt wird Schwefelsäure mit einer Konzentration von 90 bis 100 %, besonders bevorzugt von 96 bis 99 %. Die Temperatur bei der Sulfonierung liegt im allgemeinen bei 50 bis 200°C, bevorzugt bei 90 bis 110°C, besonders bevorzugt bei 95°C bis 105°C. Es wurde gefunden, daß die erfindungsgemäßen Copolymerisate ohne Zusatz von Quellungsmitteln (wie beispielsweise Chlorbenzol oder Dichlorethan) sulfoniert werden können und dabei homogene Sulfonierungsprodukte liefern.

Bei der Sulfonierung wird das Reaktionsgemisch gerührt. Dabei können verschiedene Rührertypen, wie Blatt-, Anker-, Gitter- oder Turbinenrührer eingesetzt werden. Es hat sich gezeigt, daß ein radialfördernder Doppelturbinenrührer besonders gut geeignet ist.

In einer besonderen Ausführungsform der vorliegenden Erfindung erfolgt die Sulfonierung nach dem sogenannten "Semibatchverfahren". Bei dieser Methode wird das Copolymerisat in die temperierte Schwefelsäure eindosiert. Dabei ist es besonders vorteilhaft, die Dosierung portionsweise durchzuführen.

Nach der Sulfonierung wird das Reaktionsgemisch aus Sulfonierungsprodukt und Restsäure auf Raumtemperatur abgekühlt und zunächst mit Schwefelsäuren abnehmender Konzentrationen und dann mit Wasser verdünnt.

Falls gewünscht kann der erfindungsgemäß erhaltene Kationenaustauscher in der H-Form zur Reinigung mit entionisiertem Wasser bei Temperaturen von 70 bis 145°C, vorzugsweise von 105 bis 130°C behandelt werden.

Für viele Anwendungen ist es günstig, den Kationenaustauscher von der sauren Form in die Natrium-Form zu überführen. Diese Umladung erfolgt mit Natronlauge einer Konzentration von 10 bis 60 Gew.-%, vorzugsweise 40 bis 50 Gew.-%. Die Temperatur bei der Umladung ist ebenfalls von Wichtigkeit. Es hat sich gezeigt, daß bei Umladungstemperaturen von 60 bis 120°C, vorzugsweise 75 bis 100°C keine Defekte an den Ionenaustauscherkugeln auftreten und die Reinheit besonders günstig ist. Bei diesem Verfahrensschritt kann die auftretende Reaktionswärme zur Erwärmung des Reaktionsgemisches genutzt werden.

Nach der Umladung können die Kationenaustauscher zur weiteren Reinigung mit entionisiertem Wasser oder wäßrigen Salzlösungen, beispielsweise mit Natriumchlorid- oder Natriumsulfatlösungen, behandelt werden. Dabei wurde gefunden, daß die Behandlung bei 70 bis 150°C, vorzugsweise 120 bis 135° besonders effektiv ist und keine Verringerung der Kapazität des Kationenaustauschers bewirkt.

Die nach dem erfindungsgemäßen Verfahren erhaltenen Kationenaustauscher zeichnen sich durch eine besonders hohe Stabilität und Reinheit aus. Sie zeigen auch nach längerem Gebrauch und vielfacher Regeneration keine Defekte an den Ionenaustauscherperlen und ein deutlich verringertes Ausbluten (Leaching) des Austauschers.

### Beispiele

### Untersuchungsmethoden:

### Lösliche Anteile von Saatpolymerisat

Zur Bestimmung der löslichen Anteile wurden 5 bis 7 g Saatpolymerisat in eine Extraktionshülse eingewogen und über Nacht in einer Soxhlet-Apperatur mit 800 ml Toluol extrahiert (Badtemperatur: 140°C). Das Extrakt wurde über eine Nutsche mit Schwarzbandfilter filtriert und am Rotationsverdampfer auf ca. 1 ml eingeengt. Anschließend wurden 300 ml Methanol zugesetzt und im Vakuum am Rotationsverdampfer bis zur Gewichtskonstanz getrocknet. Von jeder Probe wurde eine Doppelbestimmung durchgeführt.

### Quellung von Saatpolymerisat

Die Quellung der Saatpolymerisate wurde in Toluol untersucht. Dazu wurden 10 ml getrocknetes, gesiebtes Perlpolymerisat in einem 100 ml-Standzylinder eingewogen. Der Standzylinder wurde mit dem Quellmittel auf 100 ml aufgefüllt und 10 bis 20 h stehen gelassen. Dabei wurde öfter geschüttelt und darauf geachtet, daß eventuell auftretende Luftblasen entweichen können. Das Volumen der gequollenen Schüttung wurde abgelesen und ergab V₁. Der Quotient aus V₁ und dem Volumen der Schüttung aus nichtgequollenen Perlen V₀ ist definitionsgemäß der Quellungsindex (QI).

### Bestimmung der Stabilität von Kationenaustauschern durch Alkalisturz.

In 50 ml 45 gew.-% ige Natronlauge werden bei Raumtemperatur 2 ml sulfoniertes Copolymerisat in der H-Form unter Rühren eingetragen. Man läßt die Suspension über Nacht stehen. Anschließend wird eine repräsentative Probe entnommen. Hiervon werden unter dem Mikroskop 100 Perlen betrachtet. Ermittelt wird hiervon die Anzahl perfekter, ungeschädigter Perlen.

### Chatillontest zur Bestimmung der Druckfestigkeit von Kationenaustauschern

Es wird eine Chatillon-Apperatur mit Drucklehre DFIS 10 verwendet. Die Kationenaustauscherperlen werden in der Natriumform eingesetzt. Auf dem Chatillonteller wird eine einzelne Kationenaustauscherkugel mit einigen Tropfen Wasser benetzt, in Position gebracht und mit dem Stempel zerdrückt. Der zum Zerdrücken der Kugel benötigte Druck wird mit der Drucklehre gemessen. Der Meßwert wird in g pro Kugel angegeben. Die Messung wird an 27 Kugeln durchgeführt. Der Minimal - und Maximalwert werden gestrichen. Als Zahlenwert wird der Mittelwert der verbleibenden 25 Messungen angegeben. Eine ausführliche Beschreibung dieses Tests befindet sich in der der DE-OS 2 827 475.

### Bestimmung der Leitfähigkeit im Eluat von Kationenaustauschern

In eine auf 70°C temperierte Glassäule mit 60 cm Länge und 2 cm Durchmesser werden 100 ml nutschfeuchter Kationenaustauscher in der H-Form eingefüllt. Durch die Säule werden von oben nach unten 480 ml entionisiertes Wasser mit einer Durchflußgeschwindigkeit von 20 ml/h (0, 2 Bettvolumen pro Stunde) geleitet. Die Leitfähigkeit der unten aus der Säule austretenden Flüssigkeit werden nach 200 ml Durchfluß (entsprechend 2 Bettvolumina) und nach 400 ml Durchfluß (entsprechend 4 Bettvolumina) ermittelt und in µS pro cm gemessen.

### Bestimmung der Menge an Polystyrolsulfonsäuren im Eluat von Kationenaustauschern

Die Gesamtmenge der bei der Bestimmung der Leitfähigkeit vom sulfonierten Produkt abfließenden Flüssigkeit wird aufgefangen. Mittels Gelpermeationschromatographie wird die Gesamtmenge an Polystyrolsulfonsäuren unter Verwendung von Polystyrolsulfonsäuren bekannten Molekulargewichtes als Eichsubstanz bestimmt.

### Beispiel 1 (Vergleichsbeispiel)

Entsprechend Beispiel 1 der DE 19 634 393 wurde ein Copolymerisat hergestellt. Dieses wurde nach der in Beispiel 7 der DE 19 634 393 beschriebenen Methode durch Sulfonierung in einen Kationenaustauscher überführt. Zur Durchführung des Chatillontests wurde ein Teil des Produktes entsprechend der in Beispiel 2 d beschriebenen Arbeitsweise in die Na-Form überführt.

| | |
|---|---|
| Stabilitätstest / Alkalisturz. [Anzahl perfekter Kugeln] | 90/100 |
| Chatillontest / Druckfestigkeit [g/Kugel] | 480 |
| Leitfähigkeit im Eluat nach 2 bzw. 4 Bettvolumina [µS/cm] | 192/146 |
| Menge an Polystyrolsulfonsäure im Eluat [mg/ml] | 109,5 |

### Beispiel 2 (erfindungsgemäß)

### a) Herstellung eines Saatpolymerisates

In einem 4 l Glasreaktor werden 1 960 ml entionisiertes Wasser vorgelegt. Hierin werden 630 g einer mikroverkapselten Mischung aus 1,0 Gew.-% Divinylbenzol, 0,6 Gew.- % Ethylstyrol(eingesetzt als handelsübliches Gemisch aus Divinylbenzol und Etylstyrol mit 63 Gew.-% Divinylbenzol), 0,5 Gew.-% tert.Butylperoxy-2-ethylhexanoat und 97,9 Gew.-% Styrol gegeben, wobei die Mikrokapsel aus einem mit Formaldehyd gehärteten Komplexkoazervat aus Gelatine und einem Acrylamid/Acrylsäure-Copolymerisat besteht. Die mittlere Teilchengröße beträgt 231 µm. Die Mischung wird mit einer Lösung aus 2,4 g Gelatine, 4 g Natriumhydrogenphosphatdodekahydrat und 100 mg Resorcin in 80 ml entionisiertem Wasser versetzt, langsam gerührt und unter Rühren 10 h bei 75°C polymerisiert. Anschließend wird durch Temperaturerhöhung auf 95°C auspolymerisiert. Der Ansatz wird über ein 32 µm-Sieb gewaschen und getrocknet. Man erhält 605 g eines kugelförmigen, mikroverkapselten Polymerisats mit glatter Oberfläche. Die Polymerisate erscheinen optisch transparent; die mittlere Teilchengröße beträgt 220 µm. Das Saatpolymerisat hat einen Volumen-Quellungsindex von 4,7 und lösliche Anteile von 0,45 %.

### b) Herstellung eines Copolymerisates

In einem 4 l Glasreaktor werden 300,2 g Saatpolymerisat aus (2a) und eine wäßrige Lösung aus 1 100g entionisiertem Wasser, 3,6 g Borsäure und 1 g Natriumhydroxid eingefüllt und die Rührgeschwindigkeit auf 220 upm (Umdrehungen pro Minute) eingestellt. Innerhalb von 30 min wird ein Gemisch aus 732,7 g Styrol, 48,30 g Acrylnitril, 96,1 g Divinylbenzol, 23,1 g Ethylstyrol (gemeinsam eingesetzt als handelsübliches Gemisch aus Divinylbenzol und Ethylstyrol und 80,6 Gew.% Divinylbenzol) und 7,2 g Dibenzoylperoxid (75 gew.%ig, wasserfeucht) zugesetzt. Das Gemisch wird 60 min bei Raumtemperatur gerührt, wobei der Gasraum mit Stickstoff gespült wird. Danach wird eine Lösung von 2,4 g Methylhydroxyethylcellulose in 120 g entionisiertem Wasser zugesetzt. Der Ansatz wird nun auf 63°C aufgeheizt und 10 Stunden bei dieser Temperatur belassen, anschließend wird 2 Stunden auf 95°C erwärmt. Der Ansatz wird nach dem Abkühlen gründlich über ein 40 µm-Sieb mit entionisiertem Wasser gewaschen und dann 18 Stunden bei 80°C im Trockenschrank getrocknet. Man erhält 1 164 g eines kugelförmigen, Copolymerisats mit einer Teilchengröße von 412 µm.

### c) Herstellung eines Kationenaustauschers

In einem 2 l Vierhalskolben werden 1 800 ml 97,32 gew.%ige Schwefelsäure vorgelegt und auf 100°C erhitzt . In 4 Stunden werden in 10 Portionen - insgesamt 400 g trockenes Copolymerisat aus 2b, unter Rühren eingetragen. Anschließend wird weitere 4 Stunden bei 100°C gerührt. Nach dem Abkühlen wird die Suspension in eine Glassäule überführt. Die Schwefelsäure wird mit abnehmender Konzentration, beginnend mit 90 Gew.-% , endend mit reinem Wasser in einer Säule verdrängt. Man erhält 1 790 ml Kationenaustauscher in protonierter Form (H-Form).

| | |
|---|---|
| Stabilitätstest / Alkalisturz. [Anzahl perfekter Kugeln] | 100/100 |
| Leitfähigkeit im Eluat nach 2 bzw. 4 Bettvolumina [µS/cm] | 106/68 |
| Menge an Polystyrolsulfonsäure im Eluat [mg/ml] | 39 |

### d) Umladung eines Kationenaustauschers

Zur Umladung des Kationenaustauschers aus der H- in die Natriumform werden 1 700 ml sulfoniertes Produkt aus 2c) und 850 ml entionisiertes Wasser bei Raumtemperatur in einem 4 l-Glasreaktor vorgelegt. Die Suspension wird auf 80°C erhitzt und in 30 Minuten mit 480 g 45 gew.%iger, wässriger Natronlauge versetzt. Anschließend wird weitere 15 Minuten bei 80°C gerührt. Nach dem Abkühlen wird das Produkt mit entionisiertem Wasser gewaschen. Man erhält 1 577 ml Kationenaustauscher in der Natrium-Form (Na-Form).

| | |
|---|---|
| Chatillontest / Druckfestigkeit [g/Kugel] | 1480 |

### e) Behandlung eines Kationenaustauschers in der Na-Form mit entionisiertem Wasser

1l Kationenaustauscher aus (2d) wird mit 660 ml entionisiertem Wasser bei 130°C 6 Stunden lang behandelt. Während der Behandlung wird das Wasser zweimal ausgetauscht.

Nach der Behandlung mit Wasser wurde der Kationenaustauscher wieder in die H-Form überführt und die Stabilität, Leitfähigkeit im Eluat und die Menge an Polystyrolsulfonsäuren erneut bestimmt.

| | |
|---|---|
| Stabilitätstest / Alkalisturz. [Anzahl perfekter Kugeln] | 98/100 |
| Leitfähigkeit im Eluat nach 2 bzw. 4 Bettvolumina [µS/cm] | 82/54 |
| Menge an Polystyrolsulfonsäure im Eluat [mg/ml] | 28 |

### Beispiel 3 (erfindungsgemäß)

### b) Herstellung eines Copolymerisates

In einem 4 l Glasreaktor werden 300 g Saatpolymerisat aus (2a) und eine wäßrige Lösung aus 1 100 g entionisiertem Wasser, 3,6 g Borsäure und 1 g Natriumhydroxid eingefüllt und die Rührgeschwindigkeit auf 220 upm eingestellt. Innerhalb von 30 min wird ein Gemisch aus 715 g Styrol, 60 g Acrylnitril, 100,8 g Divinylbenzol, 24,2 g Ethylstyrol (gemeinsam eingesetzt als handelsübliches Gemisch aus Divinylbenzol und Ethylstyrol mit 80,6 Gew.% Divinylbenzol) und 7,2 g Dibenzoxlperoxid (75 gew.%ig, wasserfeucht) als feed zugesetzt. Das Gemisch wird 60 min bei Raumtemperatur gerührt, wobei der Gasraum mit Stickstoff gespült wird. Danach wird eine Lösung von 2,4 g Methylhydroxyethylcellulose in 120 g entionisiertem Wasser zugesetzt. Der Ansatz wird nun auf 63°C aufgeheizt und 10 Stunden bei dieser Temperatur belassen, anschließend wird 2 Stunden auf 95°C erwärmt. Der Ansatz wird nach dem Abkühlen gründlich über ein 40 µm-Sieb mit entionisiertem Wasser gewaschen und dann 18 Stunden bei 80°C im Trockenschrank getrocknet. Man erhält 1 152 g eines kugelförmigen, Copolymerisats mit einer Teilchengröße von 410 µm.

### c) Herstellung eines Kationenaustauschers

In einem 2 l Vierhalskolben werden 1 800 ml 97,5 gew.%ige Schwefelsäure vorgelegt und auf 100 °C erhitzt. In 4 Stunden werden in 10 Portionen - insgesamt 400 g trockenes Copolymerisat aus (3b), unter Rühren eingetragen. Anschließend wird weitere 4 Stunden bei 100°C gerührt. Nach dem Abkühlen wird die Suspension in eine Glassäule überführt. Schwefelsäuren abnehmender Konzentrationen, beginnend mit 90 Gew.-% , zuletzt reines Wasser werden von oben über die Säule filtriert. Man erhält 1 715 ml Kationenaustauscher in der H-Form.

| | |
|---|---|
| Stabilitätstest / Alkalisturz. [Anzahl perfekter Kugeln] | 97/100 |
| Leitfähigkeit im Eluat nach 2 bzw. 4 Bettvolumina [µS/cm] | 110/74 |
| Menge an Polystyrolsulfonsäure im Eluat [mg/ml] | 34 |

### d) Umladung eines Kationenaustauschers

Zur Umladung des Kationenaustauschers aus der H- in die Natriumform werden 1 700 ml sulfoniertes Produkt aus (3c) und 850 ml Edelwasser bei Raumtemperatur in einem 4 l-Glasreaktor vorgelegt. Die Suspension wird auf 80°C erhitzt und in 30 Minuten mit 480 g 45 gew.%iger, wässriger Natronlauge versetzt. Anschließend wird weitere 15 Minuten bei 80°C gerührt. Nach dem Abkühlen wird das Produkt mit entionisiertem Wasser gewaschen. Man erhält 1 565 ml Kationenaustauscher in der Na-Form.

| | |
|---|---|
| Chatillontest / Druckfestigkeit [g/Kugel] | 1450 |

## Patentansprüche

1. Verfahren zur Herstellung von monodispersen gelförmigen Kationenaustauschem durch
a) Ausbilden einer Suspension von Saatpolymerisat in einer kontinuierlichen wässrigen Phase,
b) Quellen des Saatpolymerisates in einem Monomergemisch aus Vinylmonomer, Vernetzer und Radikalstarter
c) Polymerisieren des Monomergemisches im Saatpolymerisat
d) Funktionalisieren des gebildeten Copolymerisates durch Sulfonierung,
**dadurch gekennzeichnet, dass** das Saatpolymerisat ein vernetztes Polymerisat mit einem Quellungsindex in Toluol von 2,5 bis 7,5 ist und einen Gehalt an nicht verdampfbaren, löslichen Anteilen von weniger als 1 Gew.-% hat.

2. Verfahren nach Anspruch 1 **dadurch gekennzeichnet, daß** das Saatpolymerisat ein vemetztes Polymerisat , hergestellt aus
i) 96,5 bis 99,0 Gew.-% Monomer,
ii) 0,8 bis 2,5 Gew.-% Vemetzer und
iii) 0,2 bis 1,0 Gew.-% aliphatischer Peroxyester als Polymerisationsinitiator, ist.

3. Verfahren nach Anspruch 2, **dadurch gekennzeichnet, daß** der aliphatische Peroxyester den Formeln I, II oder III 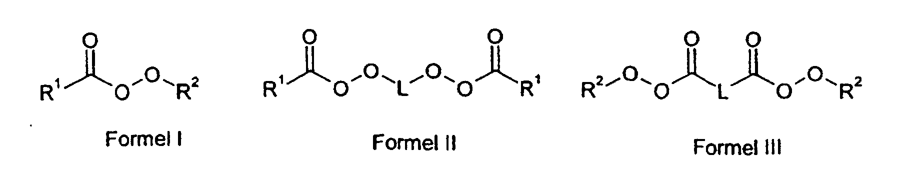 entspricht, worin
R¹ für einen Alkylrest mit 2 bis 20 C-Atomen oder einen Cycloalkylrest mit 3 bis 20 C-Atomen steht,
R² für einen verzweigten Alkylrest mit 4 bis 12 C-Atomen steht und
L für einen Alkylrest mit 2 bis 20 C-Atomen oder einen Cycloalkylenrest mit 3 bis 20 C-Atomen steht.

4. Verfahren nach Anspruch 1, **dadurch gekennzeichnet, daß** das Saatpolymerisat mikroverkapselt ist.

5. Verfahren nach Anspruch 1, **dadurch gekennzeichnet, daß** das Vinylmonomer ein Gemisch aus
92 - 99 Gew.-% Styrol und
1 - 8 Gew.-% Acrylnitril ist.

6. Verfahren nach Anspruch 1, **dadurch gekennzeichnet, daß** der Gehalt an Vernetzer im Monomergemisch 1 bis 25 Gew.-% beträgt.

7. Verfahren nach Anspruch 6, **dadurch gekennzeichnet, daß** der Gehalt an Vernetzer im Monomergemisch 7 bis 15 Gew.-% beträgt.

8. Verfahren nach Anspruch 1, **dadurch gekennzeichnet, daß** der Radikalstarter Dibenzoylperoxid ist.

9. Verfahren nach Anspruch 1, **dadurch gekennzeichnet, daß** die Sulfonierung ohne Quellmittel erfolgt.

10. Verfahren nach Anspruch 1, **dadurch gekennzeichnet, daß** das funktionalisierte Copolymerisat durch Umsetzung mit 10 bis 60 gew.%iger Natronlauge bei einer Temperatur von 60 bis 120°C in die Natriumform überführt wird.

11. Verfahren nach Anspruch 10, **dadurch gekennzeichnet, daß** das funktionalisierte Copolymerisat in der Na-Form bei 70 bis 150°C mit entionisiertem Wasser oder wäßrigen Salzlösungen behandelt wird.

12. Monodisperse gelförmige Kationenaustauscher mit hohen Stabilität und Reinheit erhältlich durch
a) Ausbilden einer Suspension von Saatpolymerisat in einer kontinuierlichen wässrigen Phase,
b) Quellen des Saatpolymerisates in einem Monomergemisch aus Vinylmonomer, Vemetzer und Radikalstarter,
c) Polymerisieren des Monomergemisches im Saatpolymerisat,
d) Funktionalisieren des gebildeten Copolymerisates durch Sulfonierung
**dadurch gekennzeichnet, dass** das Saatpolymerisat ein vemetztes Polymerisat mit einem in Toluol gemessenen Quellungsindex von 2,5 bis 7,5 ist und einen Gehalt an nicht verdampfbaren, löslichen Anteilen von weniger als 1 Gew.-% hat.

## Claims

1. Method for producing monodisperse gelatinous cation exchangers by
a) forming a suspension of a seed polymer in a continuous aqueous phase,
b) swelling the seed polymer in a monomer mixture of vinyl monomer, cross-linking agent and radical initiator
c) polymerising the monomer mixture in the seed polymer
d) functionalising the copolymer formed, by sulphonation,
**characterised in that** the seed polymer is a cross-linked polymer with a swelling index in toluene of 2.5 to 7.5 and has a content of nonvolatile, soluble fractions of less than 1% by weight.

2. Method according to claim 1, **characterised in that** the seed polymer is a cross-linked polymer, produced from
i) 96.5 to 99.0% by weight monomer,
ii) 0.8 to 2.5% by weight cross-linking agent and
iii) 0.2 to 1.0 by weight aliphatic peroxyester as polymerisation initiator.

3. Method according to claim 2, **characterised in that** the aliphatic peroxyester corresponds to formulae I, II or III 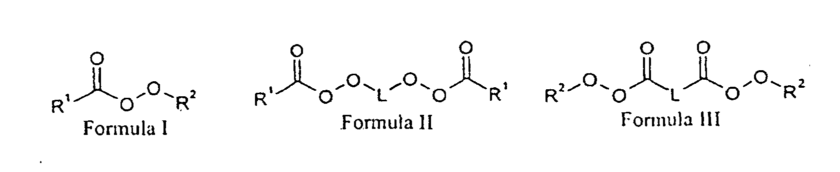 wherein
R¹ represents an alkyl radical with 2 to 20 carbon atoms or a cycloalkyl radical with 3 to 20 carbon atoms,
R² represents a branched alkyl radical with 4 to 12 carbon atoms and
L represents an alkyl radical with 2 to 20 carbon atoms or a cycloalkylene radical with 3 to 20 carbon atoms.

4. Method according to claim 1, **characterised in that** the seed polymer is microencapsulated.

5. Method according to claim 1, **characterised in that** the vinyl monomer is a blend of
92 to 99% by weight styrene and
1 to 8% by weight acrylonitrile.

6. Method according to claim 1, **characterised in that** the cross-linking agent content in the monomer blend is 1 to 25% by weight.

7. Method according to claim 6, **characterised in that** the cross-linking agent content in the monomer blend is 7 to 15% by weight.

8. Method according to claim 1, **characterised in that** the radical initiator is dibenzoylperoxide.

9. Method according to claim 1, **characterised in that** sulphonation takes place without swelling agents.

10. Method according to claim 1, **characterised in that** the functionalised copolymer is converted into the sodium form by reaction with 10 to 60% by weight sodium hydroxide solution, at a temperature of 60 to 120°C.

11. Method according to claim 10, **characterised in that** the functionalised copolymer is treated in the Na form at 70 to 150°C with deionised water or aqueous saline solutions.

12. Mondisperse gelatinous cation exchangers with high stability and purity, obtainable by
a) forming a suspension of a seed polymer in a continuous aqueous phase,
b) swelling the seed polymer in a monomer mixture of vinyl monomer, cross-linking agent and radical initiator
c) polymerising the monomer mixture in the seed polymer
d) functionalising the copolymer formed, by sulphonation,
**characterised in that** the seed polymer is a cross-linked polymer with a swelling index measured in toluene of 2.5 to 7.5 and has a content of non-volatile, soluble fractions of less than 1% by weight.

## Revendications

1. Procédé de production d'échangeurs de cations sous forme de gels monodispersés par
a) formation d'une suspension de polymère de semence dans une phase aqueuse continue,
b) gonflement du polymère de semence dans un mélange de monomères par un monomère vinylique, un réticulant et un amorceur radicalaire,
c) polymérisation du mélange de monomères dans le polymère de semence,
d) fonctionnalisation du copolymère formé par sulfonation,
**caractérisé en ce que** le polymère de semence est un polymère réticulé ayant un indice de gonflement dans le toluène de 2,5 à 7,5 et une teneur en portions solubles non évaporables inférieure à 1 % en masse.

2. Procédé selon la revendication 1, **caractérisé en ce que** le polymère de semence est'un polymère réticulé produit à partir de
i) 96,5 à 99,0 % en masse de monomère,
ii) 0,8 à 2,5 % en masse de réticulant et
iii) 0,2 à 1,0 % en masse de peroxyester aliphatique comme initiateur de polymérisation.

3. Procédé selon la revendication 2 **caractérisé en ce que** le peroxyester aliphatique correspond aux formules I, II ou III 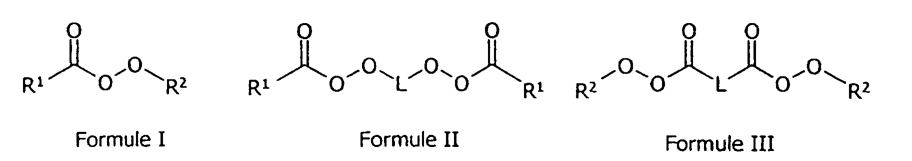 où
R¹ représente un reste alkyle ayant 2 à 20 atomes de carbone ou un reste cycloalkyle ayant 3 à 20 atomes de carbone,
R² représente un reste alkyle ramifié ayant 4 à 12 atomes de carbone et
L représente un reste alkyle ayant 2 à 20 atomes de carbone ou un reste cycloalkylène ayant 3 à 20 atomes de carbone.

4. Procédé selon la revendication 1, **caractérisé en ce que** le polymère de semence est microencapsulé.

5. Procédé selon la revendication 1, **caractérisé en ce que** le monomère vinylique est un mélange de
92 - 99 % en masse de styrène et
1 - 8 % en masse d'acrylonitrile.

6. Procédé selon la revendication 1, **caractérisé en ce que** la teneur en réticulant dans le mélange de monomères est 1 à 25 % en masse.

7. Procédé selon la revendication 6, **caractérisé en ce que** la teneur en réticulant dans le mélange de monomères est 7 à 15 % en masse.

8. Procédé selon la revendication 1, **caractérisé en ce que** l'amorceur radicalaire est le peroxyde de dibenzoyle.

9. Procédé selon la revendication 1, **caractérisé en ce que** la sulfonation a lieu sans agent gonflant.

10. Procédé selon la revendication 1, **caractérisé en ce que** le copolymère fonctionnalisé est converti en la forme sodium par réaction avec de la lessive de soude à 10 à 60 % en masse à une température de 60 à 120°C.

11. Procédé selon la revendication 10, **caractérisé en ce que** le copolymère fonctionnalisé sous la forme Na est traité à 70 à 150°C avec de l'eau désionisée ou des solutions salées aqueuses.

12. Echangeurs de cations sous forme de gels monodispersés à grande stabilité et grande pureté pouvant être obtenus par
a) formation d'une suspension de polymère de semence dans une phase aqueuse continue,
b) gonflement du polymère de semence dans un mélange de monomères par un monomère vinylique, un réticulant et un amorceur radicalaire,
c) polymérisation du mélange de monomères dans le polymère de semence,
d) fonctionnalisation du copolymère formé par sulfonation,
**caractérisés en ce que** le polymère de semence est un polymère réticulé ayant un indice de gonflement mesuré dans le toluène de 2,5 à 7,5 et une teneur en portions solubles non évaporables inférieure à 1 % en masse.
